# FASCICULE DE BREVET EUROPEEN

(11) **EP 0 978 359 B1**
(45) Date de publication et mention de la délivrance du brevet: **08.03.2000**
(21) Numéro de dépôt: 98440169.5
(22) Date de dépôt: 03.08.1998
(51) Int. Cl.: B27D 3/00, B30B 7/02, B32B 31/00, B27N 3/22, B29C 35/16, F25D 25/04

(54) **Unité de refroidissement pour panneaux du type panneaux mélaminés en fin de cycle de pressage à chaud.**
Kühleinheit für Platten z.B. Melaminharzplatten nach einem Heisspresszyklus
Cooling apparatus for panels of the type that have been glued with melamine exiting from a hot press

(43) Date de publication de la demande: 09.02.2000
(73) Titulaire: Espace Production International (Société Anonyme), 67520 Marlenheim (DE)
(72) Inventeur: Strub, Jean-Jacques, 67190 Dinsheim (FR)
(74) Mandataire: Rhein, Alain

(56) Documents cités:
- DE-A- 2 912 456
- DE-A- 3 725 007
- FR-A- 2 534 154
- US-A- 2 897 772
- US-A- 3 993 189
- US-A- 4 354 549

## Description

La présente invention concerne une unité de refroidissement destinée à abaisser progressivement la température de panneaux y circulant à l'issue de leur fabrication, comme par exemple de panneaux mélaminés en fin de cycle de pressage à chaud telle que décrit dans le préambule de la revendication 1. Une telle unité de refroidissement est connue du document US 3 993 189 A.

Une telle unité de refroidissement est destinée à être intégrée à une chaîne de fabrication de panneaux, en bout de chaîne avant que ces derniers ne subissent les opérations d'usinage visant à leur conférer leur forme définitive. Actuellement, leur refroidissement n'est pas effectué à l'aide d'un traitement particulier, mais résulte naturellement de l'équilibrage des températures entre les panneaux qui sont simplement empilés et la température régnant dans le lieu de stockage des empilements.

Le refroidissement est nécessaire car, en sortie de la presse, les panneaux mélaminés sont à une température de l'ordre de 100°C. On procède donc à leur stockage jusqu'à stabilisation de leur température. Actuellement, ce temps de stabilisation est compris entre sept et dix jours, les écarts constatés dépendant de multiples facteurs difficilement quantifiables et non maîtrisables tels que les conditions climatiques, induisant en particulier le degré d'hygrométrie et la température, les caractéristiques techniques des matières premières utilisées dans la fabrication des panneaux, etc....

La durée de la période de stabilisation conduit à des contraintes économiques spécifiques, car d'une part elle nécessite des espaces de stockage importants, et d'autre part elle réduit la flexibilité et la réactivité de la production. Lesdits espaces de stockage sont de plus des enceintes contrôlées, nécessitant un équipement particulier, qui augmente encore le coût de la surface dévolue aux panneaux en cours de refroidissement. Quant à la réactivité, elle est évidemment largement obérée par la durée importante de la période de stabilisation, à une époque où l'exigence de rapidité est omniprésente.

L'empilement des panneaux chauds provoque par ailleurs des effets indésirables dans les panneaux eux-mêmes, qui nuisent à la qualité des produits finaux.

Ainsi, les panneaux étant empilés directement les uns sur les autres, l'empilement résultant peut être vu comme un nouveau volume plein qui réagit de manière spécifique aux conditions notamment de température et d'humidité régnant dans l'enceinte contrôlée de stockage. L'inertie thermique est notamment très différente de celle des panneaux individuels, le positionnement des panneaux relativement à l'empilement jouant à cet égard un rôle important.

La différence de température et d'humidité entre l'extérieur de la pile et le coeur du nouveau volume provoque des tensions internes dans les panneaux, notamment à leur périphérie. Ces tensions sont ensuite la cause de déformations, qui peuvent être manifestes lorsqu'on usine les panneaux après leur phase de stabilisation, notamment lorsqu'on sépare des zones périphériques de zones qui se sont trouvées plus au coeur de l'empilement.

Les panneaux, plans à l'issue de leur phase de pressage, se retrouvent donc affectés de contraintes internes après l'étape de stabilisation, ce qui peut avoir pour effet de déformer certains produits finis après usinage, notamment lorsque la découpe a pour objet la fabrication de planches ou lamelles allongées. Celles-ci peuvent présenter une forme incurvée, d'une manière qui peut aller jusqu'à les rendre impropres à un usage ultérieur. L'inconvénient est donc important.

Avec l'unité de refroidissement on gagne en surface tout en améliorant la flexibilité de fabrication, ce qui représente un atout considérable lorsqu'en plus, les produits offerts sont débarrassés des lacunes techniques de leurs devanciers.

En sortie de ladite unité, les panneaux ont été individuellement portés à une température telle que les opérations d'usinage pourraient être immédiatement effectuées, alors que cela est impensable directement après la sortie des presses. Pour optimiser la qualité des panneaux, on leur fait cependant de préférence subir une période de stabilisation, qui n'excède en principe pas deux jours.

Pour réaliser la circulation continue des supports, le bâti comporte, entre l'entrée et la sortie du trajet de refroidissement, deux voies de cheminement parallèles des panneaux, dans lesquelles lesdits panneaux sont déplacés en sens inverse, lesdites voies communiquant à leurs deux extrémités pour réaliser l'échange de l'une à l'autre des panneaux et/ou des supports.

La géométrie utilisée est celle qui procure le gain de place maximal, et qui autorise une conception technique plus simple à bien des égards que celles qui résulteraient d'autres configurations géométriques permettant un fonctionnement en circuit fermé.

L'invention est caractérisée par le fait que l'entrée et la sortie des panneaux sont situées au même niveau dans les deux voies parallèles, le bâti comportant des moyens de communication directe entre celles-ci, prévus dans la paroi séparant lesdites voies, et permettant aux panneaux de franchir ladite unité de refroidissement sans passer par les voies parallèles formant le circuit de refroidissement.

Il s'agit en quelque sorte d'une possibilité de débrayage qui peut être souhaitée dans le fonctionnement général de la chaîne, pour des raisons techniques ou, par exemple, pour effectuer de temps en temps des sondages de la qualité des panneaux.

En effet, lors d'une production, avant d'intégrer normalement l'étape de refroidissement, il peut être intéressant de vérifier qu'un panneau en sortie de la presse ne présente pas de défaut qui nécessiterait un réajustement de la chaîne en amont.

Plus précisément, les moyens de communication directe entre les voies parallèles consistent en une trappe coulissante commandée par un vérin, ouvrant ou obturant dans la paroi séparant les voies parallèles un orifice calibré pour permettre le libre passage des panneaux de l'un à l'autre.

Comme on l'a indiqué, l'unité de refroidissement de l'invention est destinée à être intégrée à une chaîne de fabrication des panneaux et, à ce titre, l'entrée et la sortie du trajet de refroidissement comportent un système à bande rotative sans fin respectivement d'introduction et d'extraction des panneaux.

En tant qu'élément de ladite chaîne, le refroidisseur doit pouvoir être automatisé, et donc programmé à la fois pour un fonctionnement purement individuel, si besoin est, ou pour réagir à des signaux provenant d'autres élément en amont ou en aval de ladite chaîne, dans la plupart des cas. Des capteurs renseignent l'unité central de gestion sur l'état des différents composants de l'unité à cet effet, à des moments adéquats du processus de refroidissement.

Ainsi, l'arrêt de la bande sans fin d'alimentation en panneaux à l'entrée, ou le démarrage de la bande sans fin d'extraction des panneaux en sortie, sont commandés par des contacts mécaniques de fin de course contre lesquels viennent buter lesdits panneaux respectivement en fin d'introduction et avant l'extraction.

Cela concerne plus particulièrement l'aspect électronique, rendant possible l'automatisation du refroidisseur. Pour ce qui a trait à l'aspect mécanique, le système à bande rotative sans fin équipant l'entrée et la sortie du trajet de refroidissement est configuré d'une part pour ne pas s'opposer au déplacement des supports des panneaux, et d'autre part pour libérer un espace correspondant à une configuration desdits supports leur permettant d'exercer correctement cette fonction de support des panneaux, ces derniers devant rester plans.

Selon une configuration possible, lesdits systèmes à bande sans fin sont constitués d'au moins deux bandes parallèles laissant subsister entre elles un espace tel que les supports, constitués de palettes, puissent prendre la forme d'une grille configurée en fourche d'allure rectangulaire à au moins trois branches reliées par un longeron unique, lesdites branches entourant alors les bandes sans fin.

De préférence, les bandes parallèles sont au nombre de quatre, et la fourche constituant la palette support comporte cinq branches.

Comme cela a été mentionné auparavant, ce ne sont pas les panneaux qui sont directement entraînés dans le refroidisseur, mais lesdites palettes support, de façon à préserver la planéité de ces panneaux, qui reposent sur les supports et ne subissent aucune manipulation susceptible de les déformer ou d'entraver le processus de stabilisation.

Les moyens d'entraînement des supports consistent en des systèmes mécaniques à boucle sans fin comportant sur leur périphérie extérieure des équerres, disposés dans chacune des voies parallèles sur deux côtés des palettes support, les équerres étant elles-mêmes disposées dans les deux systèmes mécaniques à des niveaux tels qu'elles puissent servir d'appui horizontal aux palettes support.

Selon l'invention, les équerres se succèdent à la périphérie des systèmes mécaniques à boucle sans fin selon un pas unique leur conférant un espacement régulier.

Plus précisément, lesdits moyens d'entraînement sont des chaînes continues du type chaînes de vélo, sur la périphérie extérieure desquelles sont disposées à intervalle régulier les équerres d'appui des palettes support.

Ces moyens d'entraînement présentent donc à intervalle régulier des éléments pouvant supporter les palettes, qui sont progressivement véhiculées à l'intérieur des voies de cheminement parallèles, d'abord dans un sens, puis dans l'autre.

Pour s'adapter à la configuration géométrique de l'enceinte formant l'unité de refroidissement, les chaînes sont mécaniquement regroupées par deux, chaque groupe étant mu par un unique moyen moteur dont l'arbre entraîne simultanément les pignons d'une des extrémités, lesdites chaînes et leurs équerres associées étant disposées dans les voies parallèles de telle sorte que les équerres soutiennent les palettes au voisinage de leurs coins.

Ces voies, d'allure parallélépipédique, peuvent par conséquent être vues comme étant dotées de chaînes d'entraînement à proximité de leurs coins.

De préférence, le moyen moteur proprement dit est un moteur électrique.

Celui-ci coopère avec ces moyens de mesure de l'angle parcouru par l'arbre rotatif, permettant d'obtenir l'arrêt dudit moteur après chaque incrément angulaire correspondant à un entraînement des équerres égal à leur pas d'espacement. Ces moyens de mesure de l'angle peuvent être des capteurs d'angle classiques, par exemple du type de ceux qui sont utilisés dans les machines à commande numérique.

Selon une possibilité, l'arbre du moteur est muni d'un disque solidaire, dont la périphérie est munie d'ergots axiaux régulièrement espacés d'un écart angulaire correspondant au pas d'espacement des équerres, lesdits ergots pouvant coopérer avec un contact de fin de course stoppant le moteur après chaque déplacement correspondant à un pas.

En d'autres termes, la coopération des ergots avec le contact de fin de course permet l'entraînement séquentiel des plateaux sur leur support, qui progressent par à-coups, les moments d'arrêt étant destinés à l'alimentation et à l'extraction des panneaux d'une part, et d'autre part au passage des panneaux et/ou des supports d'une voie de cheminement à l'autre. Le processus, bien que continu, est cependant séquentiel pour cette raison.

Pour des raisons de commodité de conception, le moteur et le contact de fin de course avec lequel il coopère via le disque muni d'ergots sont par exemple disposés dans chaque voie à l'extrémité opposée à celle comportant l'entrée et/ou la sortie du trajet de refroidissement.

Ces extrémités, ainsi que celles qui sont proches de l'entrée et de la sortie, comportent en outre des orifices de communication entre lesdites voies, permettant l'établissement du circuit fermé de circulation pour les supports, et la réalisation de la totalité du trajet de refroidissement pour les panneaux.

En effet, les palettes support effectuent en principe ad infinitum un cycle les faisant passer d'une voie à l'autre et vice versa. Les panneaux n'effectuent en principe qu'un seul cycle, et sont déchargés avant que leurs supports ne rejoigne la voie de cheminement comportant l'entrée.

Selon une configuration possible, lesdites extrémités comportent des systèmes mécaniques à boucle sans fin réalisant le passage de l'une à l'autre voie des panneaux et/ou leur support, lorsqu'ils sont dans leur position la plus proche desdites extrémités.

Dans cette position, lorsque les moyens d'entraînement à équerres sont à l'arrêt, lesdits systèmes à boucle sans fin, de préférence des chaînes, prennent le relais pour réaliser le transfert. Les équerres, libérées de leur fardeau, peuvent alors entamer leur rotation autour des pignons d'extrémité des chaînes.

Les systèmes à chaînes sans fin d'extrémité sont munis, sur leur périphérie externe, de pousseurs pour entraîner le support, supportant ou non un panneau, vers l'autre voie de cheminement. Ce sont ces pousseurs qui se chargent de réaliser le transfert concret des supports, voire des plateaux. Lesdits systèmes sont de préférence identiques aux deux extrémités et obéissent à un fonctionnement équivalent. Bien entendu, les pousseurs ont une périodicité d'espacement supérieure à la largeur des palettes support, un jeu de fonctionnement s'ajoutant à ladite largeur.

Dans les zones d'extrémité précitées, des détecteurs optiques détectent la présence des supports lorsqu'ils sont dans leur position la plus proche des extrémités des voies parallèles de refroidissement. Ils ont notamment pour fonction de démarrer le fonctionnement des bandes à pousseur, lorsqu'ils sont localisés en fin de trajet dans une voie. A l'opposé, lorsqu'ils sont au début du trajet de refroidissement dans l'autre voie, ils servent à détecter la présence des palettes support, indiquant aux moyens de transfert d'une voie à l'autre d'effectuer un transfert de palette uniquement si la première position dans la voie d'arrivée est vide et disponible. Dans le cycle de fonctionnement, une information est également fournie à la bande d'alimentation en panneau, indiquant s'il y a un support. En effet, c'est uniquement s'il y a un support vide qui se présente à proximité de ladite bande que cette dernière peut fonctionner et charger un panneau. Un autre contact de fin de course, déjà cité, indique alors que le panneau est correctement chargé.

Tous les signaux émanant de ces détecteurs mécaniques et optiques sont gérés électroniquement et assurent non seulement le bon fonctionnement de l'ensemble, mais encore une fonction de sécurité : s'il arrivait par exemple qu'aucune palette support ne se présentait avant sa position de chargement, la bande sans fin de chargement ne serait pas actionnée, et un signal d'erreur permettrait à l'opérateur de procéder à une vérification.

Dans l'invention, les moyens de refroidissement sont constitués de ventilateurs disposés d'un côté le long des voies de cheminement, le côté situé en face étant équipé de gaines d'extraction de l'air.

De préférence, la forme des capots entourant les ventilateurs et celle des gaines d'extraction est conçue pour optimiser le transfert et la directivité des flux d'air, les ventilateurs et les gaines de chaque voie étant en outre disposés selon une configuration tête-bêche.

Au surplus, les ventilateurs sont séparés des voies de cheminement des panneaux par des grilles régulant et répartissant le flux d'air.

Les panneaux, quelle que soit leur position dans les conduits ou voies de cheminement parallèles, sont constamment soumis à un flux d'air, par exemple à température ambiante, qui abaisse progressivement leur température. Au bout du trajet de refroidissement, la température globale de chaque panneau est considérablement descendue, le différentiel pouvant excéder 50°C.

Pour optimiser la gestion de l'espace, la configuration préférée pour l'enceinte de refroidissement est verticale, ce qui implique que les deux voies de cheminement des palettes support et des panneaux sont également verticales.

Comme on le verra plus en détail dans la suite, ceci a pour conséquence que les chaînes d'entraînement sont par exemple verticales, alors que les équerres, chaînes sans fin de transfert d'une voie à l'autre, ventilateurs, etc..... ont une allure plutôt horizontale.

Ces unités de refroidissement sont facilement intégrables dans des chaînes de fabrication, notamment du fait de l'existence des bandes automatisées d'alimentation et de déchargement. Il est cependant à noter que la conception dont elles font l'objet permet en plus de les disposer en série l'une à la suite de l'autre, pour des applications particulières nécessitant un haut rendement, si cela s'avère nécessaire, pratiquement sans modifications.

L'invention va à présent être décrite plus en détail, notamment en référence aux figures explicatives fournies en annexe, pour lesquelles :
- la figure 1 est une vue en élévation de face d'une unité de refroidissement selon l'invention ;
- la figure 2 est une vue en élévation de côté de la même unité ;
- la figure 3 en est une vue de dessus ;
- la figure 4 montre une représentation schématique du fonctionnement, avec la succession des couples panneaux / support cheminant dans un sens, puis dans l'autre ; et
- la figure 5 complète la représentation schématique de la figure 4 en l'intégrant dans l'enceinte refroidie munie des moyens de refroidissement, montrée selon une variante possible.

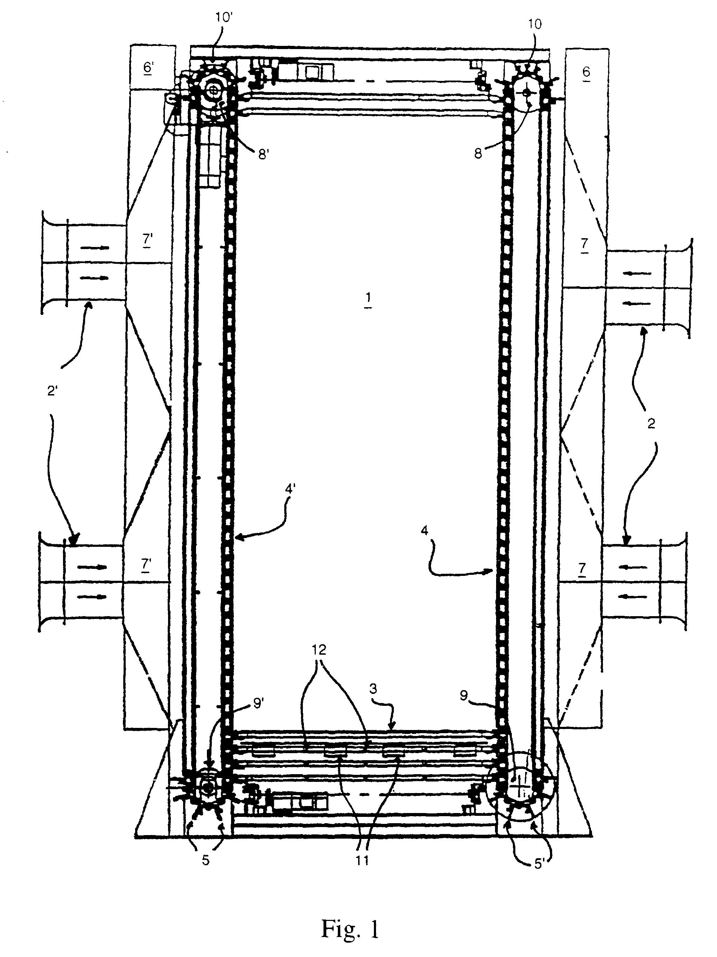

La figure 1 montre l'aspect du refroidisseur de l'invention telle qu'il peut être vu depuis l'amont de la chaîne de fabrication. L'enceinte (1) refroidie est constituée entre des ventilateurs (2, 2') de refroidissement propulsant de l'air à destination de ladite enceinte (1), dans laquelle sont véhiculés les couples support (12) / plateau (3) au moyen de chaînes sans fin (4, 4') munies d'équerres (5, 5') supportant les palettes support (12). Dans cette figure, les ventilateurs apparaissent sur les deux côtés latéraux à cause de l'existence de la seconde voie (B) de cheminement des plateaux, située au second plan mais dont les ventilateurs (2) dépassent.

Pour chaque voie, en face des ventilateurs (2), des gaines d'extraction (6, 6') sont prévues pour recycler l'air réchauffé vers le milieu ambiant.

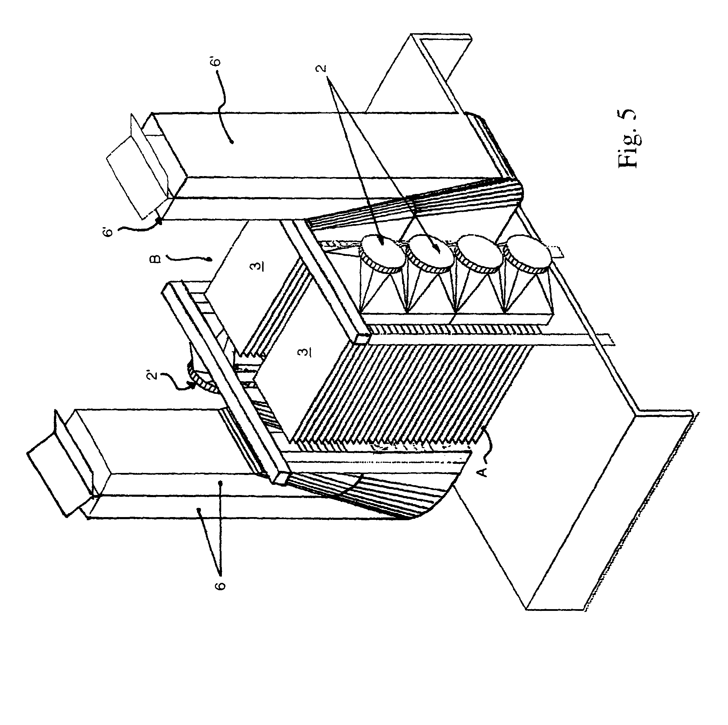

Immédiatement en aval des ventilateurs, le volume du conduit les contenant s'élargit pyramidalement en des déflecteurs (7, 7') répartissant l'air dans tout le volume qui leur est dévolu. En l'espèce, les ventilateurs sont au nombre de deux sur chaque colonne, nombre qui peut varier selon les caractéristiques des ventilateurs, la géométrie du bâti, etc.... (voir en particulier l'exemple de la figure 5).

Les chaînes sans fin (4, 4') sont rotatives autour de pignons d'extrémité (8, 8' ; 9, 9'), dont l'un est entraîné par un moteur électrique (10, 10'), situé de préférence en partie supérieure de l'enceinte (1).

Les plateaux arrivent via une bande sans fin (11) dont on distingue les quatre courroies s'interpénétrant avec les branches de la palette (12) supportant le panneau (3), puis sont véhiculés vers le haut suivant des déplacements successifs correspondant à l'intervalle séparant les équerres (5, 5'). L'entraînement suivant lesdits pas successifs est réalisé par les moteurs supérieurs (10), comportant comme on l'a mentionné auparavant un disque fixé sur leur arbre, dont la périphérie est dotée de plots séparés par un écart angulaire correspondant audit pas (non représentés). Un contact de fin de course situé sur le trajet de ces plots arrête la rotation du moteur après chaque pas, avant que le moteur ne reçoive à nouveau l'ordre de repartir, quand le changement / déchargement a eu lieu, et si les conditions de sécurité sont garanties (existence d'un support à l'entrée, etc....). Ce montage, classique, est à la portée de l'homme de l'art.

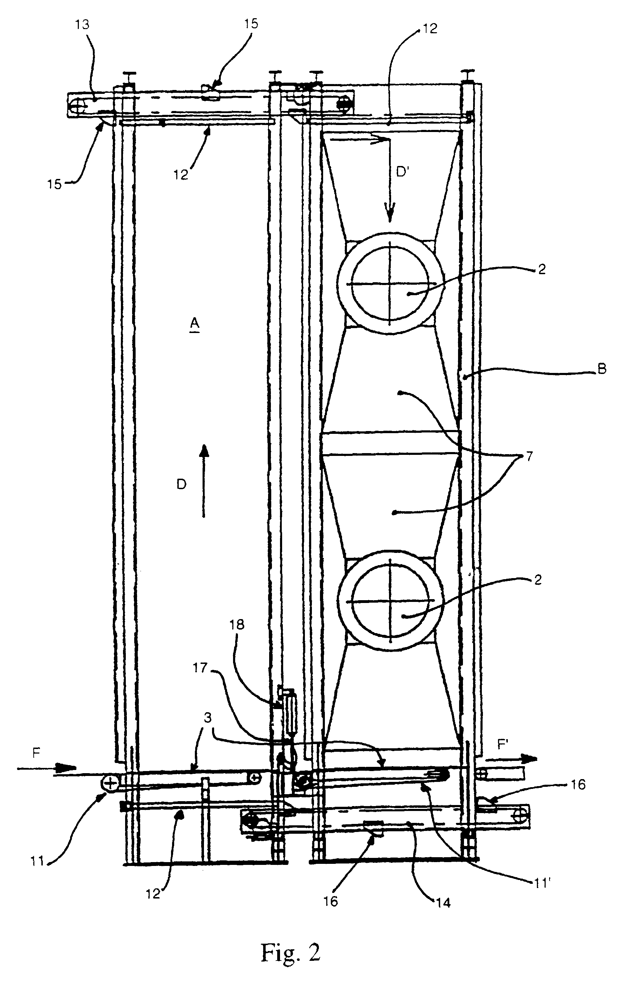

La figure 2 est particulièrement intéressante car, représentée dans le sens de défilement général de la chaîne de fabrication (symbolisée par la flèche F, F'), elle éclaire mieux la réalisation des transferts d'une voie (A) à l'autre (B). Le sens de cheminement des plateaux est représenté par les flèches (D, D').

Cette figure représente également les chaînes sans fin supérieure (13) et inférieure (14), munies de leurs pousseurs respectifs (15, 16), permettant de changer les palettes support (12) de voie. Ceux-ci sont mis en marche après qu'un détecteur optique ait indiqué l'absence d'un support (12) dans la voie d'arrivée. Ces détecteurs, disposés aux extrémités de chaque voie (A, B) envoient un rayon de préférence diagonal, qui est interrompu lors de la présence d'une palette support (12).

La gestion des interruptions dans les voies (A, B) donne le départ de la chaîne sans fin (13, 14), dont un des pousseurs (15, 16) se trouve à proximité du couple panneau (3) / support (12), jusqu'à ce que le détecteur de l'autre voie (B, A) indique que le transfert a été effectué, et désactive les moyens d'entraînement de la bande. Sur cette dernière, les pousseurs (15, 16) sont disposés à intervalles réguliers correspondant au trajet à effectuer pour assurer le transfert.

La figure 2 montre enfin le dispositif de débrayage comportant une trappe coulissante (17) commandée par un vérin (18). On évite par son truchement l'étape de refroidissement. Ainsi, si l'opérateur veut tester un panneau, par exemple pour contrôler l'absence de défaut, il lui suffit d'actionner cette fonctionnalité. La trappe (18) étant ouverte, le contact de fin de course provoquant normalement l'arrêt de la bande (11) pour que l'entraînement du panneau vers le haut soit possible ne s'applique plus. Le panneau est donc entraîné vers la bande de sortie (11'), qui l'extrait du refroidisseur.

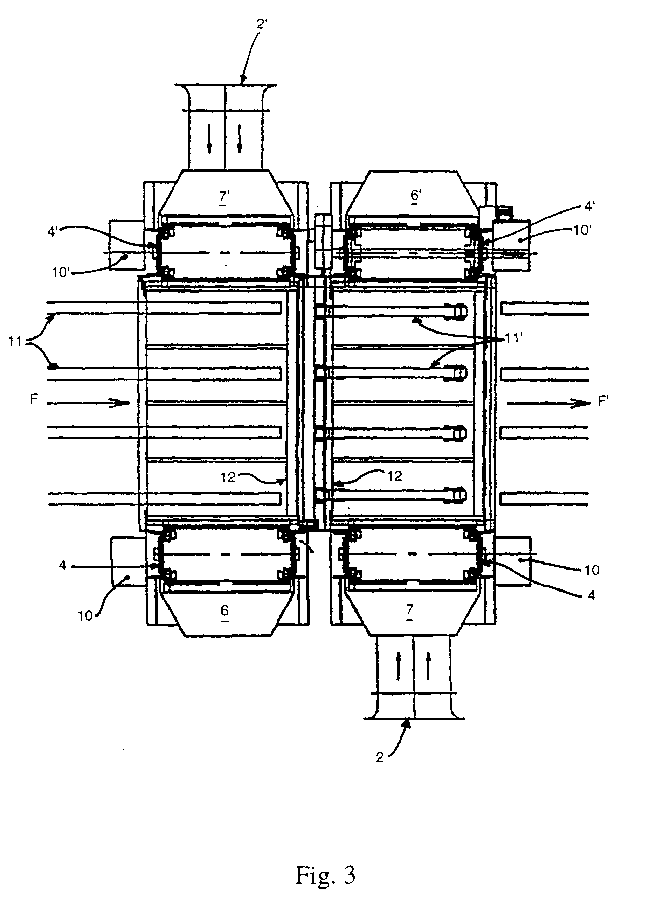

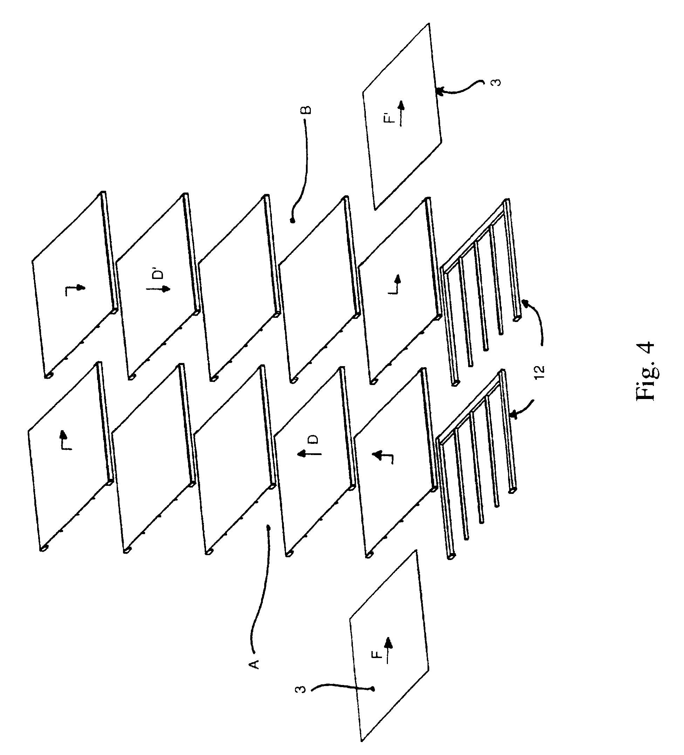

Le principal intérêt de la figure 3 est de montrer l'interpénétration entre les bandes de chargement (11) et de déchargement (11') des panneaux (3) d'une part, et les branches des fourches constituant les palettes support (12), lesquelles sont encore mieux représentées en figure 4, dans laquelle les éléments mobiles sont représentés sans les moyens techniques qui permettent de les entraîner et de les refroidir.

En d'autres termes, seuls les palettes support (12) et les panneaux (3) sont montrés dans cette figure 4, dans une configuration simplifiée illustrant cependant parfaitement le trajet qu'ils effectuent en commun, et les portions de trajet au cours desquelles ils sont séparés. En bas de la colonne (A), après le transfert, la palette (12) est à vide, l'arrivée du panneau (3) ne survenant que quelques pas plus haut, au niveau de l'alimentation, représentée par le panneau (3) à gauche de la voie (A). De même, après extraction représentée par le panneau à droite, ledit support (12) est à vide pour quelques pas avant son transfert de la voie (B) à la voie (A).

La figure 5 représente, en perspective et schématiquement, une variante possible à quatre ventilateurs et deux gaines d'extraction par voie (A, B). Cela permet d'affiner la circulation d'air, mais les autres caractéristiques de l'unité de refroidissement n'en sont pas pour autant changées.

La description qui précède ne concerne qu'un exemple de mise en oeuvre de l'invention, qui ne peut être considérée comme limitatif de celle-ci. Au contraire, les variantes entrant dans le domaine de protection tracé par les revendications annexées en font bien entendu partie.

## Revendications

1. Unité de refroidissement destinée à abaisser progressivement la température de panneaux y circulant à l'issue de leur fabrication, par exemple de panneaux mélaminés en fin de cycle de pressage à chaud, comportant un bâti délimitant le trajet de refroidissement emprunté par les panneaux (3), le long duquel sont disposés des moyens de refroidissement (2) de ceux-ci, lesdits panneaux étant véhiculés dans le bâti à l'aide de supports (12) mus en circuit fermé par des moyens d'entraînement actionnés séquentiellement selon des pas identiques, des moyens de détection de la présence des panneaux et/ou des supports étant disposés à différents niveaux dudit trajet de refroidissement, à des fins de contrôle et d'automatisation du fonctionnement de l'unité de refroidissement, ledit bâti comportant en outre, entre l'entrée et la sortie du trajet de refroidissement, deux voies (A, B) de cheminement des panneaux parallèles, dans lesquelles lesdits panneaux sont déplacés en sens inverse, lesdites voies communiquant à leurs deux extrémités pour réaliser l'échange de l'une à l'autres des panneaux et/ou des supports, caractérisée en ce que l'entrée (F) et la sortie (F') des panneaux étant situées au même niveau dans les deux voies parallèles, le bâti comporte des moyens de communication (17) directe entre celles-ci, prévus dans la paroi séparant lesdites voies, et permettant aux panneaux de franchir ladite unité de refroidissement sans passer par les voies parallèles formant le circuit de refroidissement.

2. Unité de refroidissement destinée à abaisser progressivement la température de panneaux selon la revendication précédente, caractérisée en ce que lesdits moyens de communication directe consistent en une trappe (17) coulissante commandée par un vérin (18), ouvrant ou obturant dans la paroi séparant les voies parallèles un orifice calibré pour permettre le libre passage des panneaux de l'une à l'autre.

3. Unité de refroidissement destinée à abaisser progressivement la température de panneaux selon l'une quelconque des revendications précédentes, caractérisée en ce que l'entrée et la sortie du trajet de refroidissement comportent un système à bande rotative (11, 11') sans fin respectivement d'introduction et d'extraction des panneaux.

4. Unité de refroidissement destinée à abaisser progressivement la température de panneaux selon la revendication précédente, caractérisée en ce que l'arrêt de la bande sans fin d'alimentation en panneaux à l'entrée, ou le démarrage de la bande sans fin d'extraction des panneaux en sortie, sont commandés par des contacts mécaniques de fin de course contre lesquels viennent buter lesdits panneaux respectivement en fin d'introduction et avant l'extraction.

5. Unité de refroidissement destinée à abaisser progressivement la température de panneaux selon l'une des revendications 3 et 4, caractérisée en ce que le système à bande rotative sans fin équipant l'entrée et la sortie du trajet de refroidissement est configuré d'une part pour ne pas s'opposer au déplacement des supports (12) des panneaux (3), et d'autre part pour libérer un espace correspondant à une configuration desdits supports leur permettant d'exercer correctement cette fonction de support des panneaux, en préservant la planéité de ceux-ci.

6. Unité de refroidissement destinée à abaisser progressivement la température de panneaux selon la revendication précédente, caractérisée en ce que les systèmes à bande sans fin sont constitués d'au moins deux bandes parallèles (4, 4') laissant subsister entre elles un espace tel que les supports, constitués de palettes, puissent prendre la forme d'une grille configurée en fourche d'allure rectangulaire à au moins trois branches reliées par un longeron unique, lesdites branches entourant les bandes sans fin.

7. Unité de refroidissement destinée à abaisser progressivement la température de panneaux selon la revendication précédente, caractérisée en ce que les moyens d'entraînement consistent en des systèmes mécaniques à boucle sans fin comportant sur leur périphérie extérieure des équerres (5, 5'), disposés dans chacune des voies parallèles (A, B) sur deux côtés des palettes support, les équerres étant elles-mêmes disposées dans les deux systèmes mécaniques à des niveaux tels qu'elles puissent servir d'appui horizontal aux palettes support.

8. Unité de refroidissement destinée à abaisser progressivement la température de panneaux selon la revendication précédente, caractérisée en ce que les équerres (5, 5') se succèdent à la périphérie des systèmes mécaniques à boucle sans fin selon un pas unique leur conférant un espacement régulier.

9. Unité de refroidissement destinée à abaisser progressivement la température de panneaux selon l'une des revendications 7 et 8, caractérisée en ce que les moyens d'entraînement sont des chaînes continues du type chaînes de vélo, sur la périphérie extérieure desquelles sont disposées à intervalle régulier les équerres d'appui des palettes support.

10. Unité de refroidissement destinée à abaisser progressivement la température de panneaux selon la revendication précédente, caractérisée en ce que les chaînes sont mécaniquement regroupées par deux, chaque groupe étant mu par un unique moyen moteur (10) dont l'arbre entraîne simultanément les pignons d'une des extrémités, lesdites chaînes et leurs équerres associées étant disposées dans les voies parallèles de telle sorte que les équerres soutiennent les palettes au voisinage de leurs coins.

11. Unité de refroidissement destinée à abaisser progressivement la température de panneaux selon la revendication précédente, caractérisée en ce que le moyen moteur (10) est un moteur électrique coopérant avec des moyens de mesure de l'angle parcouru par l'arbre rotatif, permettant d'obtenir l'arrêt dudit moteur après chaque incrément angulaire correspondant à un entraînement des équerres égal à leur pas d'espacement.

12. Unité de refroidissement destinée à abaisser progressivement la température de panneaux selon la revendication précédente, caractérisée en ce que l'arbre du moteur est muni d'un disque solidaire, la périphérie de ce dernier étant munie d'ergots axiaux régulièrement espacés d'un écart angulaire correspondant au pas d'espacement des équerres, lesdits ergots pouvant coopérer avec un contact de fin de course stoppant le moteur après chaque déplacement correspondant à un pas.

13. Unité de refroidissement destinée à abaisser progressivement la température de panneaux selon l'une des revendications précédentes, caractérisée en ce que les extrémités des voies de cheminement des panneaux sur leur support comportent des orifices de communication entre lesdites voies permettant l'établissement du circuit fermé de circulation pour les supports, et la réalisation de la totalité du trajet de refroidissement pour les panneaux.

14. Unité de refroidissement destinée à abaisser progressivement la température de panneaux selon la revendication précédente, caractérisée en ce que lesdites extrémités comportent des systèmes mécaniques à boucle sans fin permettant le passage de l'une à l'autre voie des panneaux et/ou de leur support, lorsqu'ils sont dans leur position la plus proche desdites extrémités.

15. Unité de refroidissement destinée à abaisser progressivement la température de panneaux selon la revendication précédente, caractérisée en ce que ces systèmes à boucle sans fin sont des chaînes munies, sur leur périphérie externe, de pousseurs pour entraîner le support, supportant ou non un panneau, vers l'autre voie de cheminement.

16. Unité de refroidissement destinée à abaisser progressivement la température de panneaux selon la revendication précédente, caractérisée en ce que les pousseurs ont une périodicité d'espacement supérieure à la largeur des palettes support, un jeu de fonctionnement s'ajoutant à ladite largeur.

17. Unité de refroidissement destinée à abaisser progressivement la température de panneaux selon l'une des revendications précédentes, caractérisée en ce que des détecteurs optiques détectent la présence des supports lorsqu'ils sont dans leur position la plus proche des extrémités des voies parallèles de refroidissement.

18. Unité de refroidissement destinée à abaisser progressivement la température de panneaux selon l'une des revendications précédentes, caractérisée en ce que les moyens de refroidissement sont constitués de ventilateurs disposés d'un côté le long des voies de cheminement, le côté situé en face étant équipé de gaines d'extraction de l'air.

19. Unité de refroidissement destinée à abaisser progressivement la température de panneaux selon la revendication précédente, caractérisée en ce que la forme des capots entourant les ventilateurs et celle des gaines d'extraction est conçue pour optimiser le transfert et la directivité des flux d'air, les ventilateurs et les gaines de chaque voie étant en outre disposés selon une configuration tête-bêche.

20. Unité de refroidissement destinée à abaisser progressivement la température de panneaux selon l'une des revendications 21 et 22, caractérisée en ce que les ventilateurs sont séparés des voies de cheminement des panneaux par des grilles régulant et répartissant le flux d'air.

21. Unité de refroidissement destinée à abaisser progressivement la température de panneaux selon l'une quelconque des revendications précédentes, caractérisée en ce que les deux voies de cheminement des palettes support et des panneaux sont verticales.

22. Utilisation des unités de refroidissement selon les revendications précédentes en série l'une à la suite de l'autre pour améliorer le refroidissement.

## Patentansprüche

1. Kühleinheit zur allmähligen Temperatursenkung von Platten, die am Ende deren Herstellung durch dieselbe geführt werden, wie z.B. von melaminbeschichteten Platten am Ende des Warmpreßzyklus, umfasssend ein Gestell, das den von den Platten (3) durchlaufenen Kühlweg begrenzt, dementlang Kühlmittel (2) für diese letzten angeordnet sind, wobei die genannten Platten im Gestell befördert werden mittels Träger (12), die durch sequenziell gemäß identisch gleichen Abstandsteilungen betätigte Antriebsmittel fortbewegt werden, wobei Mittel zum Erfassen des Vorhandenseins der Platten und/oder der Träger zwecks der Überwachung und der Automatisierung der Arbeitsweise der Kühleinheit auf unterschiedlichen Höhen des genannten Kühlweges angeordnet sind, wobei das genannte Gestell zwischen Ein- und Ausgang des Kühlweges außerdem zwei parallele Plattenförderbahnen (A, B) umfaßt, in denen die genannten Platten in entgegengesetzter Richtung verschoben werden, wobei die genannten Bahnen an ihren beiden Enden mit einander in Verbindung stehen, um den Transfer der Platten und/oder der Träger von der einen auf die andere durchzuführen, dadurch gekennzeichnet, daß da Plattenein- (F) und -ausgang (F') bei beiden parallelen Bahnen auf einer und derselben Höhe liegen, das Gerüst Mittel (17) zur direkten Verbindung zwischen diesen letzten umfaßt, die in der die genannten Bahnen trennenden Wand vorgesehen sind und es den Platten erlauben, durch die besagte Kühleinheit zu fahren, ohne die den Kühlkreis bildenden, parallelen Bahnen zu durchlaufen.

2. Kühleinheit zur allmähligen Temperatursenkung von Platten nach dem vorgehenden Anspruch, dadurch gekennzeichnet, daß die genannten Mittel zur direkten Verbindung aus einer durch eine Winde (18) gesteuerten Schiebeklappe (17) bestehen, die in der die parallelen Bahnen trennenden Wand eine Öffnung öffnen oder schließen, die so kalibriert ist, daß sie den freien Übergang der Platten von der einen auf die andere erlaubt.

3. Kühleinheit zur allmähligen Temperatursenkung von Platten nach irgendeinem der vorgehenden Ansprüche, dadurch gekennzeichnet, daß der Eingang und der Ausgang des Kühlweges ein System mit Endlos-Drehband (11, 11') für die Zufuhr bzw. die Herausnahme der Platten umfassen.

4. Kühleinheit zur allmähligen Temperatursenkung von Platten nach dem vorgehenden Anspruch, dadurch gekennzeichnet, daß das Anhalten des Plattenzufuhr-Endlosband am Eingang oder das Einschalten des Plattenherausnahme-Endlosband am Ausgang durch mechanische Endkontakte gesteuert werden, gegen die die genannten Platten am Ende der Einführung bzw. vor der Herausnahme anstoßen.

5. Kühleinheit zur allmähligen Temperatursenkung von Platten nach einem der Ansprüche 3 und 4, dadurch gekennzeichnet, daß das System mit Endlos-Drehband, mit dem der Ein- und der Ausgang des Kühlweges versehen ist, so konfiguriert ist, daß es einerseits die Vorwärtsbewegung der Träger (12) für die Platten (3) nicht behindert und andererseits einen einer Konfiguration der besagten Träger entsprechenden Raum freigibt, wodurch eine korrekte Ausführung dieser Plattenträgerfunktion gewährleistet wird, wobei die Planheit dieser letzten behalten bleibt.

6. Kühleinheit zur allmähligen Temperatursenkung von Platten nach dem vorgehenden Anspruch, dadurch gekennzeichnet, daß die Endlosband-Systeme aus wenigstens zwei parallelen Bändern (11, 11') bestehen, die zwischen ihnen einen solchen Raum freilassen, daß die aus Paletten bestehenden Träger die Form eines als eine rechteckige Gabel gestallteten Gitters mit wenigstens drei über einen einzigen Längsträger verbundenen Schenkeln annehmen können, wobei die genannten Schenkel die Endlosbänder umgeben.

7. Kühleinheit zur allmähligen Temperatursenkung von Platten nach dem vorgehenden Anspruch, dadurch gekennzeichnet, daß die Antriebsmittel aus mechanischen Endlossystemen bestehen, die an deren Außenumkreis an jeder der parallelen Bahnen (A, B), an zwei Seiten der Tragpaletten angeordnete Winkeleisen (5, 5') umfassen, wobei de Winkeleisen ihrerseits in den beiden mechanischen Systemen auf solchen Höhen angeordnet sind, daß sie als eine waagerechte Stütze für die Tragpaletten dienen können.

8. Kühleinheit zur allmähligen Temperatursenkung von Platten nach dem vorgehenden Anspruch, dadurch gekennzeichnet, daß die Winkeleisen (5, 5') mit einer einzigen Teilung am Umkreis der mechanischen Endlossysteme angebracht, die ihnen gleiche Entfernung verleiht.

9. Kühleinheit zur allmähligen Temperatursenkung von Platten nach einem der Ansprüche 7 und 8, dadurch gekennzeichnet, daß die Antriebsmittel Endlosketten, der Art Fahrradketten, sind, auf deren Außenumkreis die Auflagewinkeleisen für die Tragpaletten in gleichen Abständen angeordnet sind.

10. Kühleinheit zur allmähligen Temperatursenkung von Platten nach dem vorgehenden Anspruch, dadurch gekennzeichnet, daß die Ketten mechanisch paarweise gruppiert sind, wobei jede Gruppe von einem einzelnen Antriebsmittel (10) angetrieben wird, dessen Welle gleichzeitig die Zahnräder des einen Endes antreibt, wobei die genannten Ketten und ihre dazugehörigen Winkeleisen so an den parallelen Bahnen angeordnet sind, daß die Winkeleisen die Paletten nahe deren Ecken tragen.

11. Kühleinheit zur allmähligen Temperatursenkung von Platten nach dem vorgehenden Anspruch, dadurch gekennzeichnet, daß das Antriebsmittel (10) ein Elektromotor ist, der mit Mitteln zum Messen des von der Drehwelle durchlaufenen Winkels zusammenwirkt, wodurch nach jeder Winkelerhöhung, die einem Antrieb der Winkeleisen gleich ihrer Entfernungsteilung entspricht, ein Anhalten des besagten Motors erreicht werden kann.

12. Kühleinheit zur allmähligen Temperatursenkung von Platten nach dem vorgehenden Anspruch, dadurch gekennzeichnet, daß die Motorwelle mit einer fest verbundenen Scheibe versehen, wobei der Umkreis dieser letzten mit Axialdornen versehen ist, die gleich weit um einen Winkelabstand, der der Entfernungsteilung der Winkeleisen entspricht, von einander entfernt sind, wobei die genannten Dorne mit einem Endkontakt zusammenwirken können, die den Motor nach jeder einer Entfernungsteilung entsprechenden Verschiebung ausschaltet.

13. Kühleinheit zur allmähligen Temperatursenkung von Platten nach einem der vorgehenden Ansprüche 12, dadurch gekennzeichnet, daß die Enden der Bahnen zur Förderung der Platten auf deren Träger Öffnungen zur Verbindung zwischen den genannten Bahnen umfassen, die das Zustandebringen des geschlossenen Umlaufkreises der Träger und des vollständigen Kühlweges der Platten erlauben.

14. Kühleinheit zur allmähligen Temperatursenkung von Platten nach dem vorgehenden Anspruch, dadurch gekennzeichnet, daß die genannten Enden mechanische Endlossysteme umfassen, die den Übergang der Platten und/oder deren Träger von der einen Bahn auf die andere erlauben, wenn sie sich in ihrer Stellung befinden, die den genannten Enden am nächsten ist.

15. Kühleinheit zur allmähligen Temperatursenkung von Platten nach dem vorgehenden Anspruch, dadurch gekennzeichnet, daß diese Endlossysteme Ketten sind, die an ihrem Außenumkreis mit Schiebern zum Befördern des Trägers, der eine Platte trägt oder nicht, zur anderen Förderbahn hin versehen sind.

16. Kühleinheit zur allmähligen Temperatursenkung von Platten nach dem vorgehenden Anspruch, dadurch gekennzeichnet, daß die Schieber eine Entfernungsteilung haben, die größer ist als die Breite der Paletten, wodurch der genannten Breite ein Funktionsspielraum zugefügt wird.

17. Kühleinheit zur allmähligen Temperatursenkung von Platten nach einem der vorgehenden Ansprüche, dadurch gekennzeichnet, daß die optischen Sensoren das Vorhandensein der Träger erfassen, wenn diese sich in ihrer Stellung befinden, die den Enden der parallelen Kühlbahnen am nächsten ist.

18. Kühleinheit zur allmähligen Temperatursenkung von Platten nach einem der vorgehenden Ansprüche, dadurch gekennzeichnet, daß die Kühlmittel aus Ventilatoren bestehen, die an einer Seite längs den Führungsbahnen angeordnet sind, wobei die gegenüberliegende Seite mit Luftabzugleitungen versehen ist.

19. Kühleinheit zur allmähligen Temperatursenkung von Platten nach dem vorgehenden Anspruch, dadurch gekennzeichnet, daß die Form der die Ventilatoren umgebenden Hauben und diejenige der Luftabzugleitungen so vorgesehen ist, daß der Transfer und die Luftstromrichtung optimiert werden, wobei die Ventilatoren und die Hauben jeder Bahn außerdem gemäß einer entgegengesetzten Konfiguration angeordnet sind.

20. Kühleinheit zur allmähligen Temperatursenkung von Platten nach einem der Ansprüche 21 und 22, dadurch gekennzeichnet, daß die Ventilatoren durch Gitter, die den Luftstrom regulieren und verteilen, von den Plattenbeförderungsbahnen getrennt sind.

21. Kühleinheit zur allmähligen Temperatursenkung von Platten nach einem der vorgehenden Ansprüche, dadurch gekennzeichnet, daß die beiden Förderbahnen für die Tragpaletten und die Platten senkrecht sind.

22. Verwendung der Kühleinheiten nach den vorgehenden Ansprüchen nach einander in einer Reihe, zum Verbessern der Kühlung.

## Claims

1. Cooling unit for progressively lowering the temperature of panels circulating through it at the end of their manufacturing, e.g. of melamine-coated panels at the end of the hot-pressing cycle, including a framework delimiting the cooling path followed by the panels (3) along which are arranged cooling means (2) for the latter, said panels being conveyed in the framework by means of supports (12) displaced in a closed circuit by driving means which are sequentially actuated according to identical pitches, means for detecting the presence of the panels and/or the supports being arranged at different levels of said cooling path, in order to monitor and automatise the operation of the cooling unit, said framework including, in addition, between the inlet and the outlet of the cooling path, two parallel panel-conveying tracks (A, B) on which said panels are moved in opposite direction, said tracks communicating with each other at both their ends, in order to perform the transfer from one to another of the panels and/or the supports, characterised in that, since the inlet (F) and the outlet (F') for the panels are located at the same level on both parallel tracks, the framework includes means (17) for a direct communication between the latter, which are provided for in the wall separating said tracks and allowing the panels to pass through said cooling unit without passing through the parallel tracks forming the cooling circuit.

2. Cooling unit for progressively lowering the temperature of panels according to the preceding claim, characterised in that said direct communicating means are comprised of a sliding trap (17) controlled by a jack (18) opening or closing, in the wall separating the parallel tracks, an opening dimensioned so as to allow the free passing through of the panels from one to another.

3. Cooling unit for progressively lowering the temperature of panels according to any one of the preceding claims, characterised in that the inlet and the outlet of the cooling path include a system with a rotating endless belt (11, 11`) for supplying and extracting the panels.

4. Cooling unit for progressively lowering the temperature of panels according to the preceding claim, characterised in that the stoppage of the endless panel-supply belt at the inlet or the starting of the endless panel-extraction belt at the outlet are controlled by mechanical limit contacts against which abut said panels at the end of the insertion and before the extraction, respectively.

5. Cooling unit for progressively lowering the temperature of panels according to any of claims 3 or 4, characterised in that the system with the rotating endless belt the inlet and the outlet of the cooling path are provided with is configured, on the one hand, so as not to impede the displacement of the supports (12) for the panels (3) and, on the other hand, to preserve a space corresponding to a configuration of said supports which allows them to correctly fulfil this function of supporting the panels, while maintaining the flatness of the latter.

6. Cooling unit for progressively lowering the temperature of panels according to the preceding claim, characterised in that the systems with and enless belt are comprised of at leat two parallel belts (11, 11') which leave between them such a space that the supports, comprised of pallets, can take the shape of a grid configured as a rectangular fork with at least three legs connected by one single longitudinal beam, said legs surrounding the endless belts.

7. Cooling unit for progressively lowering the temperature of panels according to the preceding claim, characterised in that the driving means are comprised of mechanical systems with an endless loop including at their outer periphery right-angle brackets (5, 5') arranged on each one of the parallel tracks (A, B), at two sides of the bearing pallets, the right-angle brackets being, in turn, arranged in both mechanical systems at such levels that they can act as a horizontal bearing surface for the bearing pallets.

8. Cooling unit for progressively lowering the temperature of panels according to the preceding claim, characterised in that the right-angle brackets (5, 5') are arranged at the periphery of the mechanical systems with an endless loop according to one single length of separation providing them an even separation from each other.

9. Cooling unit for progressively lowering the temperature of panels according to any of claims 7 and 8, characterised in that the driving means are continuous chains, such as bicycle chains, at the outer periphery of which are arranged, with an even separation, the bearing right-angle brackets for the bearing pallets.

10. Cooling unit for progressively lowering the temperature of panels according to the preceding claim, characterised in that the chains are mechanically grouped two by two, each group being driven by one single driving means (10) the shaft of which simultaneouly drives the toothed wheels at one of the ends, said chains and their associated right-angle brackets being arranged on the parallel tracks so that the right-angle brackets support the pallets close to their corners.

11. Cooling unit for progressively lowering the temperature of panels according to the preceding claim, characterised in that the driving means (10) is an electric motor co-operating with means for measuring the angle of displacement of the rotary shaft, allowing to achieve the stoppage of said motor after each angular increment corresponding to a displacement of the square-angle brackets equal to their length of separation.

12. Cooling unit for progressively lowering the temperature of panels according to the preceding claim, characterised in that the motor shaft is provided with an integral disc, the periphery of the latter being provided with axial catches evenly spaced by an angular separation corresponding to the length of separation of the right-angle brackets, said catches being capable of co-operating with a limit contact stopping the motor after each displacement corresponding to a length of separation.

13. Cooling unit for progressively lowering the temperature of panels according to any of the preceding claim, characterised in that the ends of the tracks for conveying the panels on their support include openings for communication between said tracks allowing to bring about the closed conveying circuit for the supports and the complete cooling path for the panels.

14. Cooling unit for progressively lowering the temperature of panels according to the preceding claim, characterised in that said ends include mechanical systems with an endless loop allowing the passage from one track to another of the panels and/or their support when they are in their position closest to said ends.

15. Cooling unit for progressively lowering the temperature of panels according to the preceding claim, characterised in that these systems with an endless loop are chains provided, at their outer periphery, with pushers for moving the support, which bears or not a panel, towards the other conveying track.

16. Cooling unit for progressively lowering the temperature of panels according to the preceding claim, characterised in that the pushers have a separation length larger then the width of the bearing pallets, an operation backlash being added to said width.

17. Cooling unit for progressively lowering the temperature of panels according to any of the preceding claims, characterised in that the optical sensors detect the presence of the supports when they are in their position closest to the ends of the parallel cooling tracks.

18. Cooling unit for progressively lowering the temperature of panels according to any of the preceding claims, characterised in that the cooling means are comprised of fans arranged at one side along the conveying tracks, the opposite side being provided with air-extraction conduits.

19. Cooling unit for progressively lowering the temperature of panels according to the preceding claim, characterised in that the shape of the casings surrounding the fans and that of the extraction conduits are designed to optimise the transfer and the directivity of the air flows, the fans and the conduits of each track being, in addition, arranged according to an opposite configuration.

20. Cooling unit for progressively lowering the temperature of panels according to any of claims 21 and 22, characterised in that the fans are separated from the panel-conveying tracks by grids that regulate and distribute the air flow.

21. Cooling unit for progressively lowering the temperature of panels according to any of the preceding claims, characterised in that both conveying tracks for the bearing pallets and the panels are vertical.

22. Use of cooling units according to the preceding claims successively in a row, in order to improve the cooling.
